# EUROPEAN PATENT APPLICATION

(11) **EP 4 492 886 A1**
(43) Date of publication of application: **15.01.2025**
(21) Application number: 23765940.4
(22) Date of filing: 06.03.2023
(51) Int. Cl.: H04W 68/02, H04W 74/08, H04W 76/27

(54) **PAGING METHOD AND APPARATUS THEREOF**

(30) Priority: 07.03.2022 CN 202210228681
(71) Applicant: Spreadtrum Communications (Shanghai) Co., Ltd., Shanghai 201203 (CN)
(72) Inventor: XU, Min, Shanghai 201203 (CN)
(74) Representative: Mewburn Ellis LLP
(86) International application number: PCT/CN2023/079848
(87) International publication number: WO 2023/169362

(57) **Abstract**

Disclosed are a paging method and a paging apparatus, which are applied to the technical field of communications. The method includes the following. A first access network device sends a first paging message to a second access network device, where the first paging message contains an identity of a terminal device to be paged and indication information for indicating that mobile terminated-small data transmission (MT-SDT) is to be performed. In this way, it is conducive to successfully paging the terminal device.

## Description

### TECHNICAL FIELD

This disclosure relates to the technical field of communications, and in particular, to a paging method and a paging apparatus.

### BACKGROUND

In a 3rd generation partnership project (3GPP) new radio (new radio, NR) protocol, an air interface state of a terminal device includes a radio resource control (RRC) idle (*RRC_idle)* state, an RRC connected (*RRC_connected)* state, and an RRC inactive (*RRC_inactive)* state. When the terminal device is in the *RRC _idle* state, the terminal device is not connected to any base station, and needs to periodically initiate a location update, a cell selection and reselection process, receive paging, and the like. When the terminal device is in the *RRC _connected* state, the terminal device is connected to a network, a base station performs relevant configuration of a radio bearer (RB) and a physical layer, etc., and the base station can perform uplink and downlink data scheduling on the terminal device. When the terminal device is in the *RRC_inactive* state, movement of the terminal device within a radio access network-based notification area (RNA) does not require to be notified to the base station, and the terminal device can reserve a certain configuration (for example, a packet data convergence protocol (PDCP), service data adaptation protocol (SDAP), etc.). If the base station needs to schedule the terminal device or the terminal device has data to be sent, the terminal device needs to transit to the *RRC_connected* state and restore the reserved configuration for data transmission.

Small data transmission (SDT) refers to transmission or reception of data when the terminal device is in the *RRC_inactive* state, and the terminal device does not need to transit to the *RRC _connected* state. When the terminal device transits to the *RRC_inactive* state through an RRC release message, the network configures some conditions for allowing the use of SDT. A base station storing a context of a terminal device, or a base station sending an RRC release message to the terminal device to make the terminal device transit to the *RRC_inactive* state, is referred to as a last serving next generation node B (gNB) or an anchor gNB.

When the terminal device is in the *RRC_inactive* state, movement of the terminal device within the RNA does not require to be notified to the base station. If the terminal device moves to a base station (referred to as base station b) in another RNA, in a mobile terminated (MT) scenario, a base station (referred to as base station a) needs to send an RAN paging message via an Xn interface between base stations to notify the base station b to page the terminal device. However, the base station b is unable to determine whether to initiate MT-SDT paging, which may result in that the terminal device is unable to be paged.

### SUMMARY

A paging method and a paging apparatus are disclosed in the present disclosure. By means of a first paging message, it is conducive to successfully paging a terminal device.

In a first aspect, a paging method is provided in embodiments of the present disclosure. The paging method is applied to a first access network device and includes the following. A first paging message is sent to a second access network device, where the first paging message contains an identity of a terminal device to be paged and indication information for indicating that mobile terminated-small data transmission (MT-SDT) is to be performed.

In an optional embodiment, the method further includes receiving first information from a core network device, where the first information contains quality of service (QoS) information about downlink data to be sent to the terminal device.

In an optional embodiment, the method further includes sending second information to the second access network device, where the second information contains one or more of the following: a data volume of downlink data to be sent to the terminal device, QoS information about the downlink data, and an identity of a radio bearer (RB) supporting small data transmission (SDT).

In an optional embodiment, the downlink data includes predicted data to be sent to the terminal device.

In an optional embodiment, the first paging message is sent to the second access network device as follows. The first paging message is sent to the second access network device in response to an identity of an RB supporting SDT including an identity of an RB of the downlink data.

In an optional embodiment, the method further includes receiving capability information from the second access network device, where the capability information indicates whether a cell served by the second access network device supports MT-SDT.

In a second aspect, a paging method is further provided in embodiments of the present disclosure. The paging method is applied to a terminal device and includes the following. A paging message is received from an access network device, where the paging message contains an identity of the terminal device to be paged and indication information for indicating that MT-SDT is to be performed. Whether to perform uplink transmission by using SDT resources are determined in response to presence of uplink data to be sent; and/or the SDT resources are selected to perform uplink transmission in response to absence of uplink data to be sent.

In an optional embodiment, whether to perform uplink transmission by using the SDT resources are determined by determining to perform uplink transmission by using the SDT resources in response to an identity of an RB supporting SDT including an identity of an RB of the uplink data to be sent.

In a third aspect, a paging method is further provided in embodiments of the present disclosure. The paging method is applied to a second access network device and includes the following. A first paging message is received from a first access network device, where the first paging message contains an identity of a terminal device to be paged and indication information for indicating that MT-SDT is to be performed.

In an optional embodiment, the method further includes sending a second paging message to the terminal device according to the first paging message, where the second paging message contains the identity of the terminal device to be paged and the indication information for indicating that MT-SDT is to be performed.

In an optional embodiment, the method further includes receiving second information from the first access network device, where the second information contains one or more of the following: the data volume of downlink data to be sent to the terminal device, QoS information about the downlink data, and an identity of an RB supporting SDT; sending a third paging message to the terminal device according to the second information, where the third paging message contains the identity of the terminal device to be paged and the indication information for indicating that MT-SDT is to be performed.

In an optional embodiment, the downlink data includes predicted data to be sent to the terminal device.

In an optional embodiment, the third paging message is sent to the terminal device according to the second information as follows. The third paging message is sent to the terminal device in response to the identity of an RB supporting SDT includes the identity of an RB of the downlink data.

In an optional embodiment, the method further includes sending capability information to the first access network device, where the capability information indicates whether a cell served by the second access network device supports MT-SDT.

In a fourth aspect, a paging method is further provided in embodiments of the present disclosure. The paging method is applied to a second access network device and includes the following. Second information is received from a first access network device, where the second information contains one or more of the following: a data volume of downlink data to be sent to a terminal device, QoS information about the downlink data, and an identity of an RB supporting SDT. A fourth paging message is sent to the terminal device according to the second information, where the fourth paging message contains an identity of the terminal device to be paged and indication information for indicating that MT-SDT is to be performed.

In an optional embodiment, the method further includes receiving a first paging message from the first access network device, where the first paging message contains the identity of the terminal device to be paged and indication information for indicating that MT-SDT is to be performed.

In an optional embodiment, the downlink data includes predicted data to be sent to the terminal device.

In an optional embodiment, the fourth paging message is sent to the terminal device according to the second information as follows. The fourth paging message is sent to the terminal device in response to an identity of an RB supporting SDT including an identity of an RB of the downlink data.

In an optional embodiment, the method further includes sending capability information to the first access network device, where the capability information indicates whether a cell served by the second access network device supports MT-SDT.

In a fifth aspect, a paging apparatus is provided in embodiments of the present disclosure. The paging apparatus includes a unit for performing the method in the first aspect, the second aspect, the third aspect, or the fourth aspect.

In a sixth aspect, another paging apparatus is provided in embodiments of the present disclosure. The paging apparatus includes a processor. The processor is configured to perform the method in the first aspect, the second aspect, the third aspect, or the fourth aspect.

In an optional embodiment, the paging apparatus further includes a memory. The memory is configured to store a computer program, and the processor is specifically configured to invoke the computer program from the memory to perform the method in the first aspect, the second aspect, the third aspect, or the fourth aspect.

In a seventh aspect, a chip is provided in embodiments of the present disclosure. The chip is configured to perform the method in the first aspect, the second aspect, the third aspect, or the fourth aspect.

In an eighth aspect, a chip module is provided in embodiments of the present disclosure. The chip module includes a communication interface and a chip. The communication interface is configured to perform communication within the chip module, or perform communication between the chip module and an external device. The chip is configured to perform the method in the first aspect, the second aspect, the third aspect, or the fourth aspect.

In a ninth aspect, a computer-readable storage medium is provided in embodiments of the present disclosure. The computer-readable storage medium stores a computer program. The computer program includes program instructions which, when executed by a processor, enables the processor to perform the method in the first aspect, the second aspect, the third aspect, or the fourth aspect.

In a tenth aspect, a computer program product is provided in embodiments of the present disclosure. The computer program product includes a computer program or an instruction which, when executed on a computer, enables the computer to perform the method in the first aspect, the second aspect, the third aspect, or the fourth aspect.

By means of embodiments of the present disclosure, the indication information for indicating that MT-SDT is to be performed is carried in the first paging message, and the second access network device can determine that an MT-SDT procedure can be initiated, so that the occurrence of a situation where the second access network device is unable to determine whether to initiate the MT-SDT procedure can be avoided, thereby facilitating successful paging of the terminal device.

### BRIEF DESCRIPTION OF THE DRAWINGS

FIG. 1 is a schematic architecture diagram of a communication system provided in embodiments of the present disclosure.
FIG. 2 is a schematic flowchart of a four-step random access provided in embodiments of the present disclosure.
FIG. 3 is a schematic flowchart of a two-step random access provided in embodiments of the present disclosure.
FIG. 4 is a schematic flowchart of a paging method provided in embodiments of the present disclosure.
FIG. 5 is a schematic flowchart of a paging method provided in other embodiments of the present disclosure.
FIG. 6 is a schematic flowchart of a paging method provided in other embodiments of the present disclosure.
FIG. 7 is a schematic flowchart of a paging method provided in other embodiments of the present disclosure.
FIG. 8 is a schematic flowchart of a paging method provided in other embodiments of the present disclosure.
FIG. 9 is a schematic structural diagram of a paging apparatus provided in embodiments of the present disclosure.
FIG. 10 is a schematic structural diagram of a paging apparatus provided in other embodiments of the present disclosure.
FIG. 11 is a schematic structural diagram of a paging apparatus provided in other embodiments of the present disclosure.
FIG. 12 is a schematic structural diagram of a chip module provided in embodiments of the present disclosure.

### DETAILED DESCRIPTION

The following will clearly and completely describe technical solutions of implementations of the disclosure with reference to accompanying drawings in implementations of the disclosure. Apparently, implementations described herein are merely some implementations, rather than all implementations, of the disclosure. Based on the implementations of the disclosure, all other implementations obtained by those of ordinary skill in the art without creative effort shall fall within the protection scope of the disclosure.

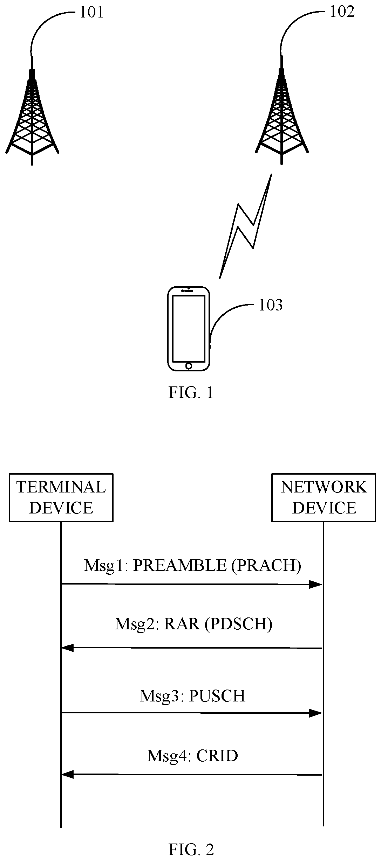

Reference is made to FIG. 1, which is a schematic architecture diagram of a communication system provided in embodiments of the present disclosure. The communication system may include, but is not limited to, a first access network device, a second access network device, and a terminal device. The number and form of devices illustrated in FIG. 1 are used as an example and do not limit embodiments of the present disclosure. In practical applications, two or more first access network devices, two or more second access network devices, and two or more terminal devices may be included. For illustrative purpose, the communication system illustrated in FIG. 1 includes one first access network device 101, one second access network device 102, and one terminal device 103.

The terminal device in embodiments of the present disclosure is a device having a wireless transmit/receive function, and may be referred to as a terminal, a user equipment (UE), a mobile station (MS), a mobile terminal (MT), an access terminal device, a vehicle-mounted terminal device, an industrial control terminal device, a UE unit, a UE station, a mobile station, a remote station, a remote terminal device, a mobile device, a UE terminal device, a wireless communication device, a UE agent, or a UE device. The terminal device may be fixed or mobile. It is to be noted that the terminal device may support at least one wireless communication technology, for example, long time evolution (LTE), new radio (NR), wideband code division multiple access (WCDMA), and the like. For example, the terminal device may be a mobile phone, a tablet computer (pad), a desktop computer, a notebook computer, an all-in-one computer, a vehicle-mounted terminal, or a virtual reality (VR) terminal device, an augmented reality (AR) terminal device, a wireless terminal in industrial control, a wireless terminal in self driving, a wireless terminal in remote medical surgery, a wireless terminal in smart grid, a wireless terminal in transport safety, a wireless terminal in smart city, a wireless terminal in smart home, a cellular phone, a cordless phone, a session initiation protocol (SIP) phone, a wireless local loop (WLL) station, a personal digital assistant (PDA), a handheld device having a wireless communication capability, a computing device or other processing devices connected to a wireless modem, a wearable device, a terminal device in a future mobile communication network, or a terminal device in a future evolved public land mobile network (PLMN). In some embodiments of the present disclosure, the terminal device may also be an apparatus with a transmit/receive function, such as a chip module. The chip module may include a chip, and may also include other discrete components. A specific technology and a specific device form adopted by the terminal device are not limited in embodiments of the present disclosure.

An access network (AN) device (such as a first access network device and a second access network device) in embodiments of the present disclosure is a device providing a wireless communication function for a terminal device. The access network device may be a radio access network (RAN) device. The access network device may support at least one wireless communication technology, for example, LTE, NR, WCDMA, and the like. For example, the access network device includes, but is not limited to, a generation node B (gNB), an evolved node B (eNB), a radio network controller (RNC), a node B (NB), a base station controller (BSC), a BSC), a base transceiver station (BTS), a home base station (e. g., home evolved node B, or home node B, HNB), a baseband unit (BBU), a transmitting and receiving point (TRP), a transmitting point (TP), a mobile switching center, etc., in a fifth generation mobile communication system (5G). The access network device may also be a radio controller, a centralized unit (CU), and/or a distributed unit (DU) in a cloud radio access network (CRAN) scenario. In some embodiments, the access network device may also be an apparatus providing a wireless communication function for the terminal device, such as a chip module. Exemplarily, the chip module may include a chip, and may also include other discrete components. A specific technology and a specific device form adopted by the access network device are not limited in embodiments of the present disclosure.

It is to be noted that technical solutions of embodiments of the present disclosure may be applied to various communication systems, for example, an LTE communication system, a fourth generation (4G) mobile communication system, a 5G mobile communication system, and a 5G NR system. Optionally, the method according to embodiments of the present disclosure is also applicable to various future communication systems, for example, a 6G system or other communication networks.

Optionally, the communication system illustrated in FIG. 1 can further include a core network device (not illustrated in FIG. 1). The core network device may have the following functions: providing a broadband access service, converging and forwarding of multiple services, satisfying requirements of different users for transmission capacity and bandwidth utilization, terminating and managing a point-to-point protocol over Ethernet (PPPoE)/ IP over Ethernet (IPoE) sessions of a user, and providing authentication services, authorization services, or charging services. The terminal device 103 may access a radio network through an access network device, and register in a core network through a core network device.

The core network device may include, but is not limited to, a mobility management network element, a user plane network element, a session management network element, and the like. In an NR system, a mobility management network element may be an access and mobility management function (AMF) network element, a user plane network element may be a user plane function (UPF) network element, and a session management network element may be a session management function (SMF) network element. The mobility management network element is a terminating point of non-access stratum (NAS) signaling, and is mainly responsible for access authentication and mobility management of a user. The terminal device may communicate with the AMF through an N1 NAS message, and a communication message between the terminal device and the AMF may also be forwarded through an N2 message in a radio access network. The radio access network communicates with the AMF through an N2 message. The user plane network element is used for processing a user message, such as forwarding and charging. The session management network element is responsible for managing creation, deletion, and the like of a session of a user, and maintaining a protocol data unit (PDU) session context and user plane forwarding pipeline information. N1 represents an interface between the AMF network element and the terminal device, and N2 represents an interface between the AMF network element and a radio access network device.

It can be understood that, the communication system described in embodiments of the present disclosure is used to more clearly illustrate technical solutions of embodiments of the present disclosure, and does not limit the technical solutions provided in embodiments of the present disclosure. It can be seen by those skilled in the art that, with the evolution of the system architecture and the appearance of a new service scenario, the technical solutions provided in embodiments of the present disclosure are applicable to similar technical problems.

To better understand the technical solutions provided in embodiments of the present disclosure, technical terms involved in embodiments of the present disclosure are first introduced.

### 1. Random Access Procedure

If the terminal device in the *non-RRC_connected* state needs to initiate data transmission, the terminal device needs to transit to the *RRC _connected* state through a random access procedure. The random access procedure refers to a process before the terminal device sends a random access preamble, tries to access a network, and establishes a basic signaling connection with the network. The preamble can be used for a network device to recognize an identity of a terminal device during random access, or used for a network device to distinguish a device initiating random access, and can also be used for other purposes, which are not limited in embodiments of the present disclosure. The random access procedure includes four-step random access and two-step random access, where the four-step random access may include four messages: message 1 (also referred to as *Msg1*)*,* message 2 (also referred to as *Msg2*)*,* message 3 (also referred to as *Msg3*) and message 4 (also referred to as *Msg4*), and a schematic flowchart of the four-step random access procedure is illustrated in FIG. 2.

First, the terminal device sends *Msg1* on a physical random access channel (PRACH) occasion (RO), where *Msg1* includes the preamble.

Secondly, after receiving the preamble, the network device generates a random access response (RAR) for the preamble and sends the RAR (also referred to as *Msg2*)*.* The RAR is carried on a physical downlink shared channel (PDSCH), the PDSCH is scheduled by a physical downlink control channel (PDCCH), and the PDCCH is scrambled by a random access radio network temporary identity (RA-RNTI).

The RAR includes one or more of the following: a timing advance command (TAC), uplink grant (UL grant), a temporary cell radio network temporary identity (TC-RNTI). The TAC carries timing advance (TA) information. The UL grant carries scheduling information for the terminal device to send *Msg3.* The terminal device without a cell radio network temporary identity (C-RNTI) may receive *Msg4* through the TC-RNTI.

The first two steps of the random access procedure mainly complete time synchronization of uplink. Multiple terminal devices may select the same RO and preamble to initiate the random access procedure, which may lead to a contention. The latter two steps of the random access procedure can solve the contention, and a unique and legal identity is assigned to the terminal device for subsequent data transmission.

After sending *Msg1,* the terminal device monitors the PDCCH scrambled by the RA-RNTI to receive the RAR. After receiving the RAR, the terminal device sends *Msg3,* where *Msg3* is carried on a physical uplink shared channel (PUSCH). For a terminal device in a *non-RRC_connected* state, an RRC common control channel (CCCH) is sent.

Finally, after the network device receives the PUSCH sent by the terminal device, if the terminal device succeeds in contention resolution, the network device generates a response (i. e. *Msg4*) for the PUSCH, where *Msg4* is carried on the PDSCH. A identity (contention resolution identity (CRID)) for uniquely identifying the terminal device is carried in *Msg4* to indicate the terminal device that succeeds in contention resolution, and other terminal devices that fail in contention resolution will re-initiate random access. If the PDSCH received by the terminal device in *Msg4* is scrambled by the TC-RNTI designated in the RAR, when the successfully decoded CRID matches the information in the CCCH in *Msg3,* the terminal device determines that the random access is successful and converts its own TC-RNTI into the C-RNTI.

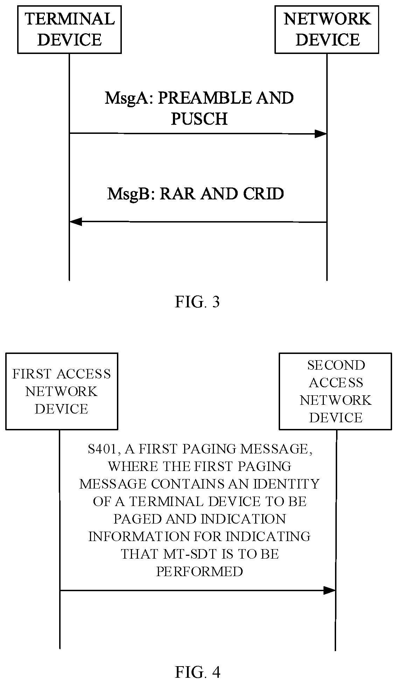

The two-step random access includes message A (also referred to as *MsgA*) and message B (also referred to as *MsgB*), and a schematic flowchart of the two-step random access procedure is illustrated in FIG. 3.

*Msg1* includes *Msg1* and *Msg3,* that is, includes a preamble sent over a physical random access channel (PRACH) and a payload sent over the PUSCH. *MsgB* includes *Msg2* and *Msg4.* If the network device only receives the preamble sent by the terminal device, the network device returns the RAR of the four-step random access procedure, and the terminal device falls back to the four-step random access.

### II. Random access-SDT (RA-SDT) and Configured Grant-SDT (CG-SDT)

SDT includes two transmission modes, that is, RA-SDT and CG-SDT.

RA-SDT refers to that during the four-step random access procedure, a data transmission mode can be carried in *Msg3* in addition to an RRC message, or RA-SDT refers to that during the two-step random access procedure, a data transmission mode can be carried in *MsgA* in addition to an RRC message.

CG-SDT refers to that a network pre-configures dedicated CGTypel resources to a terminal device, and the terminal device uses the resources to transmit a valid TA and can directly send data without sending a preamble. Compared with the four-step random access procedure, CG-SDT reduces two steps of *Msg1* and *Msg2.*

When the terminal device transits to the *RRC_inactive* state through an RRC release message, the network configures some conditions for allowing the use of SDT. Exemplarily, a data volume threshold is configured, and a radio bearer (RB) for which SDT is enabled that includes a signaling radio bearer (SRB) and a data radio bearer (DRB). In embodiments of the present disclosure, an RB for which SDT is enabled may also be described as an RB supporting SDT.

If CG-SDT is used, the following parameters may also be configured: CG resources, a threshold range of a reference signal receive power (RSRP) change, and a signal threshold used by a synchronization signal block (SSB). It is to be noted that, CG-SDT is only used in a cell where the RRC Release message is received, and once a new cell is reselected to, the terminal device releases corresponding CG resources. Optionally, when CG-SDT is performed in different cells, the following parameters may be different: a threshold range of an RSRP change and a signal threshold used by an SSB.

If RA-SDT is used, an RSRP threshold may also be configured. RA-SDT resources are configured through a system message of each cell. Optionally, RSRP thresholds configured for different cells may be different.

Reference is made to FIG. 4, which is a schematic flowchart of a paging method provided in embodiments of the present disclosure. The embodiment corresponding to FIG. 4 mainly describes how a first access network device triggers a mobile terminated-small data transmission (MT-SDT) procedure, and further describes how a second access network device triggers an MT-SDT procedure. As illustrated in FIG. 4, the paging method may include but is not limited to the following operations.

At S401, the first access network device sends a first paging message to the second access network device, where the first paging message contains an identity of a terminal device to be paged and indication information for indicating that MT-SDT is to be performed. Correspondingly, the second access network device receives the first paging message from the first access network device.

The terminal device may be in a *non-RRC_connected* state, and the *non-RRC_connected* state may refer to an *RRC_idle* state or an *RRC_inactive* state. In embodiments of the present disclosure, the indication information for indicating that MT-SDT is to be performed may also be described as indication information for indicating that enhanced paging is to be performed. The first paging message contains the indication information for indicating that MT-SDT is to be performed or the indication information for indicating that enhanced paging is to be performed. The first access network device determines that the MT-SDT procedure can be initiated. Initiating the MT-SDT procedure means that the terminal device in the *non-RRC _connected* state can perform uplink transmission using SDT resources. Initiating the MT-SDT procedure may also be described as initiating MT-SDT paging or initiating enhanced paging. By carrying the indication information for indicating that MT-SDT is to be performed in the first paging message, the second access network device can determine that the MT-SDT procedure can be initiated, and in this way, it can be avoided that the second access network device is unable to determine whether to initiate the MT-SDT procedure due to the lack of configuration information of the terminal device (for example, configuration information of an RB about whether the terminal device is allowed to use SDT), and therefore it is conducive to successfully paging the terminal device. In embodiments of the present disclosure, the terminal device using the SDT resources to perform uplink transmission includes that the terminal device using the SDT resources to transmit uplink data and/or signalling, where the uplink data may refer to useful data, service data, or user data to be sent in the terminal device, and the signalling may include signalling for responding to a paging message received by the terminal device.

Exemplarily, in the communications system illustrated in FIG. 1, a last serving access network device (or referred to as anchor access network device) corresponding to the terminal device 103 in the *non-RRC_connected* state is the first access network device 101, and the terminal device 103 moves from a radio access network-based notification area (RNA) to an access network device (such as the second access network device 102) in another RNA. In this case, if the terminal device 103 needs to be paged, the first access network device 101 needs to send a paging message to the second access network device 102 through an Xn interface to instruct the second access network device 102 to page the terminal device 103. However, the second access network device 102 does not know a condition for allowing the use of SDT configured for the terminal device 103 by a network when the terminal device transits to the *RRC_inactive* state, and therefore the second access network device 102 is unable to determine whether to initiate the MT-SDT procedure for the terminal device 103. For example, only the last serving access network device (i.e., the first access network device 101) corresponding to the terminal device 103 knows the configuration information of an RB for which SDT is enabled (i. e., a condition for allowing to use SDT), and the second access network device 102 does not know the configuration information, so the second access network device 102 is unable to determine whether to initiate the MT-SDT procedure for the terminal device 103. By means of the first paging message carrying the indication information for indicating that MT-SDT is to be performed, the second access network device can determine that the MT-SDT procedure can be initiated, which can avoid a situation where the second access network device is unable to determine whether to initiate the MT-SDT procedure.

The first paging message may be sent through the Xn interface between the first access network device and the second access network device, and the first paging message is an Xn RAN paging message.

In an embodiment, the first access network device may receive first information from a core network device, where the first information contains quality of service (QoS) information about downlink data to be sent to the terminal device. The QoS information about the downlink data may include one or more of the following: QoS flow information about the downlink data, a delay requirement of the downlink data, a data packet size of the downlink data, and service-related information of the downlink data. The QoS flow information about the downlink data may include a QoS flow identity. Optionally, the downlink data may include predicted data to be sent to the terminal device, and/or determined data to be sent to the terminal device. Optionally, the first information can further include the downlink data to be sent to the terminal device.

In an embodiment, before operations at S401, the first access network device may determine, according to the first information, whether to initiate the MT-SDT procedure. The first access network device determines, according to the first information, whether to initiate the MT-SDT procedure includes the following. The first access network device determines whether an identity of an RB supporting SDT includes an identity of an RB of the downlink data. The access network device determines to initiate the MT-SDT procedure if the identity of the RB supporting SDT includes the identity of the RB of the downlink data. If the identity of the RB supporting SDT does not include the identity of the RB of the downlink data, the access network device determines not to initiate the MT-SDT procedure. In the case where the MT-SDT procedure is determined to be initiated, the first access network device adds, to a paging message (i. e., the first paging message) sent to the second access network device, the indication information for indicating that MT-SDT is to be performed. Optionally, the first access network device sends the first paging message to the second access network device as follows. If the identity of the RB supporting SDT includes the identity of the RB of the downlink data, the first access network device sends the first paging message to the second access network device. In a case where the MT-SDT procedure is determined not to be initiated, the first access network device may not add, to the paging message sent to the second access network device, any indication information for indicating that MT-SDT is to be performed.

The identity of the RB of the downlink data is determined according to the QoS information about the downlink data. Specifically, the first access network device may determine the identity of the RB of the downlink data as follows. According to a mapping relationship between QoS flow identities and identities of RBs, the identity of the RB mapped to the QoS flow identity of the downlink data is determined as the identity of the RB of the downlink data.

Optionally, besides the QoS information about the downlink data, the first information can further include a data volume of the downlink data, where the data volume of the downlink data may include a data volume of existing downlink data to be sent to the terminal device, and/or a data volume of predicted downlink data to be sent to the terminal device. The core network device may assist the first access network device in determining whether to initiate the MT-SDT procedure by notifying the first access network device of the data volume of the downlink data.

Optionally, the core network device in embodiments of the present disclosure may be a mobile management network element (such as an AMF) or a user plane network element (such as a UPF).

In an embodiment, before the first access network device sends the first paging message to the second access network device, the first access network device and the second access network device can exchange whether a served cell supports MT-SDT. Specifically, the second access network device sends capability information to the first access network device, where the capability information indicates whether a cell served by the second access network device supports MT-SDT. Correspondingly, the first access network device receives the capability information. Optionally, the first access network device and the second access network device may exchange, in an Xn setup procedure, whether a served cell supports MT-SDT. Exemplarily, for illustrative purpose, whether a cell served by the second access network device supports MT-SDT is exchanged in the Xn setup procedure. The first access network device may send a request message to the second access network device, where the request message requests to acquire the capability information, and the second access network device sends a response message to the first access network device, where the response message includes the capability information. The request message may be an Xn setup request message, and the response message may be an Xn setup response message. Optionally, the capability information may be indicated in an NR field in served cell information in the Xn setup request and the Xn setup response, or the capability information may be indicated in a new extended field in the Xn setup request and the Xn setup response.

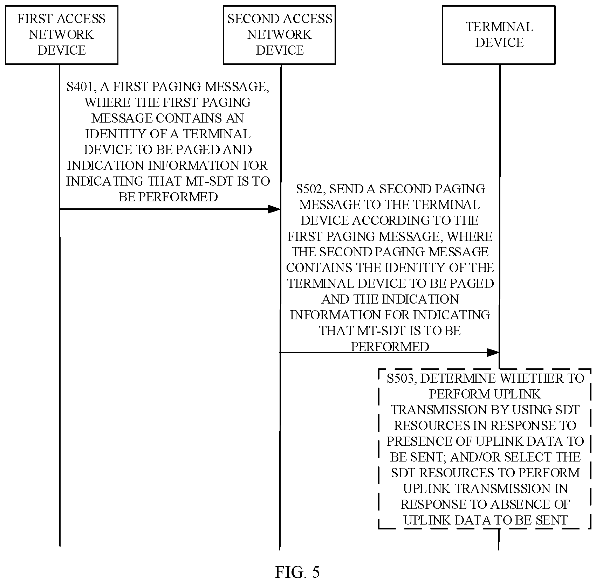

Optionally, reference is made to FIG. 5, after receiving the first paging message from the first access network device (i. e., after operations at S401), the second access network device may further perform the following operations.

At S502, the second access network device sends a second paging message to the terminal device according to the first paging message, where the second paging message contains the identity of the terminal device to be paged and the indication information for indicating that MT-SDT is to be performed. Correspondingly, the terminal device receives the second paging message.

The second access network device obtains that the first paging message contains the indication information for indicating that MT-SDT is to be performed, and the second access network device sends the second paging message to the terminal device to initiate the MT-SDT procedure. It is to be noted that information carried in the first paging message and information carried in the second paging message may be the same, but the first paging message is different from the second paging message, that is, a RAN paging message transmitted between access network devices is different from a paging message sent by an access network device to the terminal device.

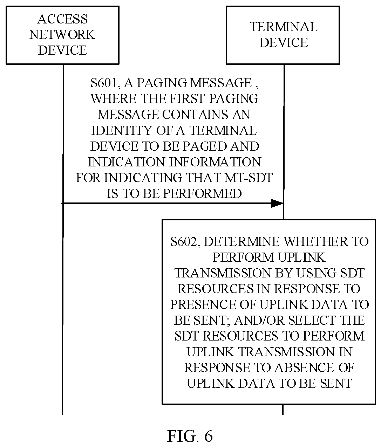

Reference is made to FIG. 6, the embodiment corresponding to FIG. 6 mainly describes how the terminal device determines whether to perform uplink transmission by using SDT resources after receiving a paging message from an access network device. The paging method illustrated in FIG. 6 includes, but is not limited to, operations at S601-S602.

At S601, an access network device sends a paging message to the terminal device, where the paging message includes an identity of a terminal device to be paged and indication information for indicating that MT-SDT is to be performed. Correspondingly, the terminal device receives the paging message from the access network device.

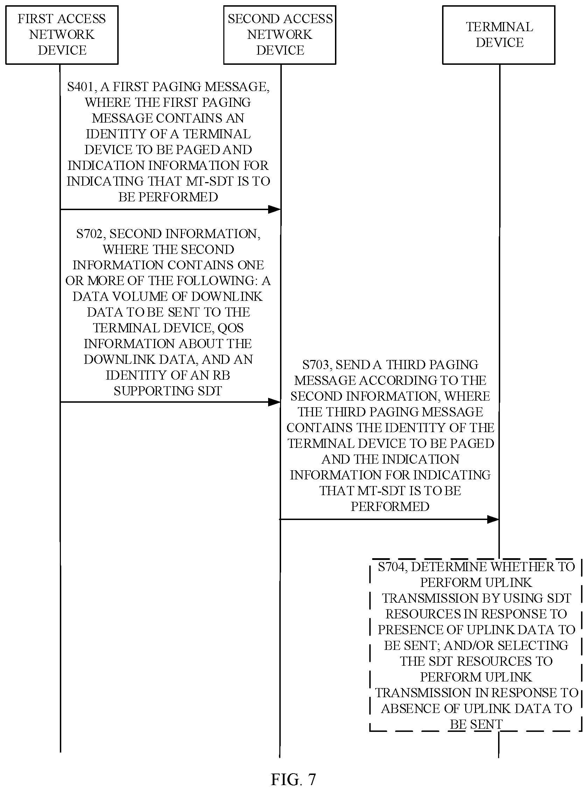

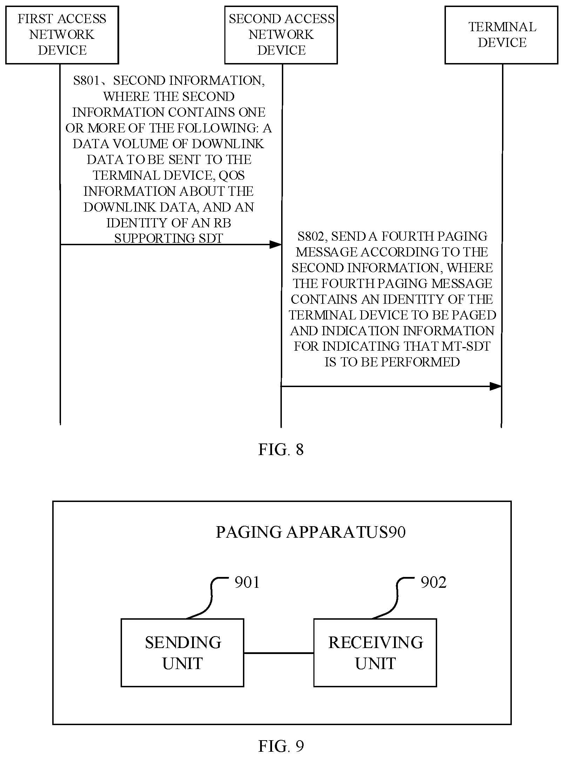

The access network device in operations at S601 may be the first access network device or the second access network device. Exemplarily, the access network device in operations at S601 is the first access network device, the paging message in operations at S601 may be the first paging message. In this case, the first access network device directly sends the paging message to the terminal device without passing through the second access network device. It can be understood that, in this case, the terminal device is within a coverage range of the first access network device. For contents of the first paging message, reference may be made to the specific description of operations at S401 in the embodiment corresponding to FIG. 4, which will not be repeatedly described herein. Exemplarily, the access network device in operations at S601 is the second access network device, the paging message in operations at S601 may be the second paging message, or the paging message in operations at S601 may be a third paging message or a fourth paging message described in the following. In this case, the first access network device may indirectly send the paging message to the terminal device through the second access network device. For contents of the second paging message, the third paging message, and the fourth paging message, reference may be made to the specific description of operations at step S502 in the embodiment corresponding to FIG. 5, operations at S703 in the embodiment corresponding to FIG. 7, and operations at S802 in the embodiment corresponding to FIG. 8, which are not described herein again.

At S602, the terminal device determines whether to perform uplink transmission by using SDT resources in response to presence of uplink data to be sent; and/or the terminal device selects SDT resources to perform uplink transmission in response to absence of uplink data to be sent.

Optionally, whether to perform uplink transmission by using SDT resources are determined as follows. If an identity of an RB supporting SDT includes an identity of an RB of uplink data to be sent, determine to perform uplink transmission by using SDT resources. Optionally, if the identity of the RB supporting SDT does not include the identity of the RB of the uplink data to be sent, uplink transmission may not be performed by using SDT resources. Exemplarily, uplink transmission may be performed by using random-access channel (RACH) resources rather than SDT resources. In other words, if the uplink data to be sent is allowed RB data, uplink transmission is determined to be performed by using SDT resources; and if the uplink data to be sent is not allowed RB data, uplink transmission may not be performed by using SDT resources.

Optionally, whether to perform uplink transmission by using SDT resources are determined as follows. Whether an identity of an RB supporting SDT includes an identity of an RB of the uplink data to be sent is determined, and whether a data volume of the uplink data to be sent satisfies a data volume threshold is determined. If the identity of the RB supporting SDT includes the identity of the RB of the uplink data to be sent, and the data volume of the uplink data to be sent satisfies the data volume threshold, it is determined that uplink transmission can be performed by using SDT resources. If the identity of the RB supporting SDT does not include the identity of the RB of the uplink data to be sent, and/or the data volume of the uplink data to be sent does not satisfy the data volume threshold, it is determined that SDT resources are unable to be used to perform uplink transmission. If the identity of the RB supporting SDT includes the identity of the RB of the uplink data to be sent, it indicates that the uplink data to be sent is allowed RB data. If the identity of the RB supporting SDT does not include the identity of the RB of the uplink data to be sent, it indicates that the uplink data to be sent is not allowed RB data. The identity of the RB supporting SDT may be configured by a network. Whether the data volume of the uplink data to be sent satisfies the data volume threshold includes whether the data volume of the uplink data to be sent is less than the data volume threshold. If the data volume of the uplink data to be sent is less than the data volume threshold, the data volume of the uplink data to be sent satisfies the data volume threshold. If the data volume of the uplink data to be sent is greater than or equal to the data volume threshold, the data volume of the uplink data to be sent does not satisfy the data volume threshold.

In the case where the terminal device determines that uplink transmission can be performed by using SDT resources, which SDT resources (such as CG-SDT resources, RA-SDT resources for four-step random access, and RA-SDT resources for two-step random access) can be used to perform uplink transmission may be determined as follows. The terminal device determines whether CG-SDT resources can be used. If CG-SDT resources are unable to be used, RA-SDT resources are used to send data to be sent. The RA-SDT resources are used to send data to be sent as follows. RA-SDT resources for the four-step random access are used to send data to be sent, or RA-SDT resources for the two-step random access are used to send data to be sent. For example, if the network device only receives the preamble sent by the terminal device, the terminal device falls back to the four-step random access procedure, and in this case, the RA-SDT resources for the two-step random access are used to send data to be sent. Exemplarily, the terminal device determines whether the CG-SDT resources can be used as follows. Whether a TA change of the terminal device is within a valid range is determined. If the TA fails due to a great change in the position of the terminal device, the CG-SDT resources are unable to be used, and a preamble needs to be sent through a random access procedure to obtain a valid TA.

In operations at S602, the SDT resources are selected to perform uplink transmission in response to absence of uplink data to be sent. In this case, uplink information to be sent may include a response message to a paging message (i. e. the paging message in operations at S601) received by the terminal device. In a case where there exists uplink data to be sent, if it is determined that SDT resources can be used to perform uplink transmission, the uplink information to be sent may include a response message to the paging message received by the terminal device and the uplink data to be sent. Optionally, the absence of uplink data to be sent may include that an RRC layer of the terminal device does not receive a request for recovering an RRC connection from an upper layer, or the terminal device performs a periodic RNA update procedure without any user data or service data to be sent. In this case, the RRC layer may indicate to the MAC layer that there is no uplink data to be sent, and uplink transmission can be performed by using SDT.

In some embodiments, after receiving the paging message (such as the first paging message or the second paging message) containing indication information for indicating that MT-SDT is to be performed, in the case where uplink data to be sent exists, the terminal device does not directly select SDT resources to perform uplink transmission, but firstly determines whether to perform uplink transmission by using SDT resources. In this way, it is beneficial to avoid initiating the MT-SDT procedure in the case where it is improper to initiate the MT-SDT procedure.

Exemplarily, if the uplink data to be sent of the terminal device includes non-SDT data, where the non-SDT data refers to data that is unable to be sent by using SDT resources, the terminal device is unable to perform uplink transmission through SDT resources. However, if the terminal device does not determine whether SDT resources can be used to perform uplink transmission, the terminal device may perform uplink transmission by using SDT resources after receiving the paging message, which will result in that the non-SDT data is unable to be sent. Alternatively, the terminal device subsequently re-sends a message to notify the access network device the presence of non-SDT data, and the access network device further sends a message to the terminal device to make the terminal device transit from the *non-RRC_connected* state to the *RRC_connected* state, and then the terminal device sends the non-SDT data, which may cause a long delay. After receiving the paging message (such as the first paging message or the second paging message) containing the indication information for indicating that perform MT-SDT is to be performed, the terminal device firstly determines whether to perform uplink transmission by using the SDT resources, and thus the above problems can be solved.

Exemplarily, in an NR system, data can be sent more than once by using SDT resources, and after the terminal device uses CG-SDT resources to send first data, the access network device can continue to schedule the terminal device which is still in the *non-RRC_connected* state to perform uplink and downlink data transmission through dynamic scheduling resources or CG resources. Furthermore, in a process that the terminal device performs uplink transmission by using CG-SDT resources, new non-SDT data that needs to be sent may emerge. In this case, the terminal device is unable to continue to perform uplink transmission by using SDT resources; otherwise, the terminal device is unable to send the non-SDT data. The terminal device determines whether to perform uplink transmission by using SDT resources, it is beneficial to avoid using SDT resources to perform uplink transmission in the case where it is improper to use SDT resources to perform uplink transmission, thereby helping to avoid resource waste and ensure better data transmission.

Optionally, after receiving the second paging message from the second access network device (i. e. S502), the terminal device may further perform the following operations.

At S503 (optional), the terminal device determines whether to perform uplink transmission by using SDT resources in response to presence of uplink data to be sent; and/or, the terminal device selects SDT resources to perform uplink transmission in response to absence of uplink data to be sent.

It is to be noted that, for an execution process of operations at S503, reference may be made to the specific description of operations at S602 in the embodiment corresponding to FIG. 6, which is not described herein again.

Optionally, referring to FIG. 7, after receiving the first paging message from the first access network device (i. e. after operations at S401), the second access network device may further perform the following operations.

At S702, the second access network device receives second information from the first access network device, where the second information contains one or more of the following: a data volume of the downlink data, QoS information about the downlink data, and an identity of an RB supporting SDT. Correspondingly, the first access network device sends the second information.

At S703, the second access network device sends a third paging message to the terminal device according to the second information, where the third paging message contains the identity of the terminal device to be paged and the indication information for indicating that MT-SDT is to be performed. Correspondingly, the terminal device receives the third paging message.

Optionally, the second access network device sends the third paging message to the terminal device according to the second information as follows. The second access network device sends the third paging message to the terminal device if an identity of an RB supporting SDT includes an identity of an RB of the downlink data. In other words, if the downlink data is allowed RB data, the second access network device may add, to the paging message (i. e. the third paging message) sent to the terminal device, the indication information for indicating that MT-SDT is to be performed. Alternatively, if the identity of the RB supporting SDT does not include the identity of the RB of the downlink data, the second access network device may not add, to the paging message sent to the terminal device, the indication information for indicating that MT-SDT is to be performed.

The first access network device may assist the second access network device in determining whether to initiate the MT-SDT procedure by sending the second information to the second access network device, that is, the first access network device assists the second access network device in determining whether to add the indication information for indicating that MT-SDT is to be performed to the paging message sent to the terminal device. In the case where the first access network device determines to initiate the MT-SDT procedure, the first access network device sends the second information to the second access network device so as to assist the second access network device in determining whether to initiate the MT-SDT procedure. The first access network device and the second access network device both determine whether to initiate the MT-SDT procedure, so that a more accurate determination result can be obtained and it is beneficial to avoid initiating the MT-SDT procedure in the case where it is improper to initiate the MT-SDT procedure.

It is to be noted that the first paging message and the second information may be carried in the same message to be sent, and may also be carried in different messages to be sent, which is not limited in embodiments of the present disclosure. Optionally, if the paging message sent by the first access network device to the second access network device does not carry the indication information for indicating that MT-SDT is to be performed, the second first network device may also send the second information to the second access network device, so as to assist the second access network device in determining whether to initiate the MT-SDT procedure. It is to be further noted that, an execution order in which the first access network device sends the paging message (for example, the first paging message) to the second access network device and the first access network device sends the second information to the second access network device is not limited in the embodiment of the present disclosure. Exemplarily, the first access network device may first send the first paging message to the second access network device, or the first access network device may first send the second information to the second access network device, or the first access network device may simultaneously send the first paging message and the second information to the second access network device.

Optionally, after receiving the third paging message from the second access network device, the terminal device may further perform the following operations.

At S704 (optional), the terminal device determines whether to perform uplink transmission by using SDT resources in response to presence of uplink data to be sent; and/or, the terminal device selects SDT resources to perform uplink transmission in response to absence of uplink data to be sent.

It is to be noted that, for an execution process of operations at S704, reference may be made to the specific description of operations at S602 in the embodiment corresponding to FIG. 6, which is not described herein again.

By means of embodiments of the present disclosure, the indication information for indicating that MT-SDT is to be performed is carried in the first paging message, and the second access network device can determine to initiate the MT-SDT procedure. In this way, the case where the second access network device is unable to determine whether to initiate the MT-SDT procedure can be avoided, thereby facilitating the terminal device being successfully paged. In addition, by sending the second information to the second access network device, the first access network device assists the second access network device in determining whether to initiate the MT-SDT procedure, so that a determination result is more accurate, and it is beneficial to avoid initiating the MT-SDT procedure in the case where it is improper to initiate the MT-SDT procedure.

Reference is made to FIG. 8, which is a schematic flowchart of a paging method provided in other embodiments of the present disclosure. The embodiment corresponding to FIG. 8 mainly describes that the first access network device does not trigger the MT-SDT procedure or did not trigger the MT-SDT procedure, but the second access network device triggers the MT-SDT procedure. As illustrated in FIG. 8, the paging method may include, but is not limited to, the following operations.

At S801, the first access network device sends the second information to the second access network device, where the second information includes one or more of the following: a data volume of downlink data to be sent to a terminal device, QoS information about the downlink data, and an identity of an RB that supports SDT. Correspondingly, the second access network device receives the second information.

Optionally, the first access network device may further send a paging message to the second access network device, where the paging message includes an identity of the terminal device to be paged. The paging message and the second information may be carried in the same message to be sent, and may also be carried in different messages to be sent, which is not limited in embodiments of the present disclosure. It is to be noted that, in the embodiment corresponding to FIG. 8, the first access network device may determine whether to initiate the MT-SDT procedure, and no matter whether the first access network device initiates the MT-SDT procedure, the first access network device may send the second information to the second access network device. Alternatively, in the embodiment corresponding to FIG. 8, the first access network device may also not determine whether to initiate the MT-SDT procedure.

At S802, the second access network device sends a fourth paging message to the terminal device according to the second information, where the fourth paging message contains the identity of the terminal device to be paged and indication information for indicating that MT-SDT is to be performed. Correspondingly, the terminal device receives the fourth paging message.

It is to be noted that, for an execution process of operations at S801 and operations at S802, reference may be made to the specific description of operations at S702 and operations at S703 in the embodiment corresponding to FIG. 7, which is not described herein again.

Optionally, before operations at S801, the method can further include the following. The first access network device sends the first paging message to the second access network device, where the first paging message contains the identity of the terminal device to be paged and the indication information for indicating that MT-SDT is to be performed. Correspondingly, the second access network device receives the first paging message from the first access network device. For a specific execution process, reference may be made to the description in the embodiment corresponding to FIG. 7. In this case, the fourth paging message in the embodiment corresponding to FIG. 8 is the same as the third paging message in the embodiment corresponding to FIG. 7.

In embodiments of the present disclosure, the first access network device sends the second information to the second access network device, so as to assist the second access network device in determining whether to initiate the MT-SDT procedure, so that a determination result is more accurate, and it is beneficial to avoid initiating the MT-SDT procedure in the case where it is improper to initiate the MT-SDT procedure.

Reference is made to FIG. 9, which is a schematic structural diagram of a paging apparatus provided in embodiments of the present disclosure. As illustrated in FIG. 9, the paging apparatus 90 includes a sending unit 901 and a receiving unit 902. The paging apparatus 90 may execute operations related to the first access network device and the second access network device in the foregoing method embodiments.

A situation in which the paging apparatus 90 is configured to implement functions of the first access network device in the foregoing embodiments is as follows.

The sending unit 901 is configured to send a first paging message to a second access network device, where the first paging message contains an identity of a terminal device to be paged and indication information for indicating that MT-SDT is to be performed.

In an optional embodiment, the receiving unit 902 may be configured to receive first information from a core network device, where the first information contains QoS information about downlink data to be sent to the terminal device.

In an optional embodiment, the sending unit 901 may be further configured to send second information to the second access network device, where the second information contains one or more of the following: a data volume of downlink data to be sent to the terminal device, QoS information about the downlink data, and an identity of an RB supporting SDT.

In an optional embodiment, the downlink data includes predicted data to be sent to the terminal device.

In an optional embodiment, the sending unit 901 configured to send the first paging message to the second access network device is configured to send the first paging message to the second access network device in response to an identity of an RB supporting SDT including an identity of an RB of the downlink data.

In an optional embodiment, the receiving unit 902 may be further configured to receive capability information from the second access network device, where the capability information indicates whether a cell served by the second access network device supports MT-SDT.

Specifically, in this case, for operations executed by the sending unit 901 and the receiving unit 902, reference may be made to the description about the first access network device in the embodiments corresponding to FIG. 4 to FIG. 8, which are not repeatedly described in detail herein.

A situation in which the paging apparatus 90 is configured to implement functions of the second access network device in the embodiments corresponding to FIG. 4 to FIG. 7 is as follows.

The receiving unit 902 is configured to receive a paging message from an access network device, where the paging message contains an identity of a terminal device to be paged and indication information for indicating that MT-SDT is to be performed.

In an optional embodiment, the sending unit 901 may be configured to send a second paging message to the terminal device according to the first paging message, where the second paging message contains the identity of the terminal device to be paged and the indication information for indicating that MT-SDT is to be performed.

In an optional embodiment, the receiving unit 902 may be further configured to receive second information from the first access network device, where the second information contains one or more of the following: a data volume of downlink data to be sent to the terminal device, QoS information about the downlink data, and an identity of an RB supporting SDT. The sending unit 901 may be further configured to send a third paging message to the terminal device according to the second information, where the third paging message contains the identity of the terminal device to be paged and the indication information for indicating that MT-SDT is to be performed.

In an optional embodiment, the downlink data includes predicted data to be sent to the terminal device.

In an optional embodiment, the sending unit 901 configured to send the third paging message to the terminal device according to the second information is configured to send the third paging message to the terminal device in response to an identity of an RB supporting SDT includes an identity of an RB of the downlink data.

In an optional embodiment, the sending unit 901 may be further configured to send capability information to the first access network device, where the capability information indicates whether a cell served by the second access network device supports MT-SDT.

Specifically, in this case, for operations executed by the sending unit 901 and the receiving unit 902, reference may be made to the description about the second access network device in the embodiments corresponding to FIG. 4 to FIG. 7, which are not repeatedly described in detail herein.

A situation in which the paging apparatus 90 is configured to implement functions of the second access network device in the embodiment corresponding to FIG. 8 is as follows.

The receiving unit 902 is configured to receive second information from a first access network device, where the second information contains one or more of the following: a data volume of downlink data to be sent to a terminal device, QoS information about the downlink data, and an identity of an RB supporting SDT.

The sending unit 901 is configured to send a fourth paging message to the terminal device according to the second information, where the fourth paging message contains an identity of the terminal device to be paged and indication information for indicating that MT-SDT is to be performed.

In an optional embodiment, the receiving unit 902 may be further configured to receive a first paging message from the first access network device, where the first paging message contains the identity of the terminal device to be paged and indication information for indicating that MT-SDT is to be performed.

In an optional embodiment, the downlink data includes predicted data to be sent to the terminal device.

In an optional embodiment, the sending unit 901 configured to send the fourth paging message to the terminal device according to the second information is configured to send the fourth paging message to the terminal device in response to an identity of an RB supporting SDT including an identity of an RB of the downlink data.

In an optional embodiment, the sending unit 901 may be further configured to send capability information to the first access network device, where the capability information indicates whether a cell served by the second access network device supports MT-SDT

Specifically, in this case, for operations executed by the sending unit 901 and the receiving unit 902, reference may be made to the description about the second access network device in the embodiment corresponding to FIG. 8, which are not repeatedly described in detail herein.

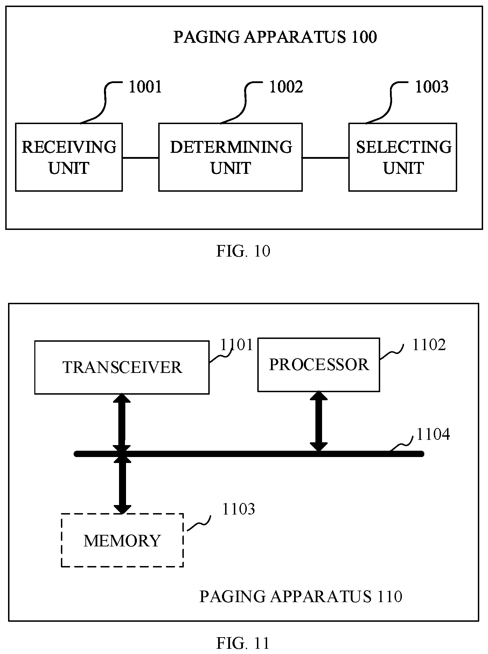

Reference is made to FIG. 10, which is a schematic structural diagram of a paging apparatus provided in other embodiments of the present disclosure. As illustrated in FIG. 10, the paging apparatus 100 includes a receiving unit 1001, a determining unit 1002, and a selecting unit 1003. The paging apparatus 100 may perform operations related to the terminal device in the foregoing method embodiments.

The receiving unit 1001 is configured to receive a paging message from an access network device, where the paging message contains an identity of a terminal device to be paged and indication information for indicating that MT-SDT is to be performed. The determining unit 1002 is configured to determine whether to perform uplink transmission by using SDT resources in response to presence of uplink data to be sent. The selecting unit 1003 configured to select SDT resources to perform uplink transmission in response to absence of uplink data to be sent.

In an optional embodiment, the determining unit 1002 configured to determine whether to perform uplink transmission by using SDT resources is specifically configured to determine to perform uplink transmission by using SDT resources in response to an identity of an RB supporting SDT including an identity of an RB of the uplink data to be sent.

The paging apparatus 100 may be further configured to implement functions of the terminal device in the embodiments corresponding to FIG. 4 and FIG. 8, which are not described herein again.

Reference is made to FIG. 11, which is a schematic structural diagram of a paging apparatus provided in other embodiments of the present disclosure. The paging apparatus 110 may be configured to implement functions of the terminal device in the foregoing method embodiments, or implement functions of the first access network device in the foregoing method embodiments, or implement functions of the second access network device in the foregoing method embodiments. The paging apparatus 110 may include a transceiver 1101 and a processor 1102. Optionally, the paging apparatus may also include a memory 1103. The transceiver 1101, the processor 1102, and the memory 1103 may be connected via a bus 1104 or in other ways. The bus is illustrated by a thick line in FIG. 11, and a connection manner between other components is only for illustrative description and is not limited thereto. The bus may be classified into an address bus, a data bus, a control bus, and the like. For ease of representation, only one thick line is illustrated in FIG. 11, which does not represent only one bus or one type of bus.

The coupling in embodiments of the present disclosure is indirect coupling or communication connection between devices, units, or modules, and may be in electrical, mechanical, or other forms, for information interaction between devices, units, or modules. A specific connection medium among the transceiver 1101, the processor 1102, and the memory 1103 is not limited in embodiments of the present disclosure.

The memory 1103 may include a read-only memory (RAM) and a random access memory (RAM), and is configured to provide an instruction and data for the processor 1102. A portion of the memory 1103 can further include a non-volatile random access memory (NVRAM).

The processor 1102 may be a central processing unit (CPU). The processor 1102 may also be a general-purpose processor, a digital signal processor (DSP), an application-specific integrated circuit (ASIC), a field programmable gate array (FPGA), or other programmable logic devices, discrete gates or transistor logic devices, discrete hardware components, etc. The general-purpose processor may be a microprocessor. Optionally, the processor 1102 may be any conventional processor or the like.

In an example, if the terminal device is of the structure illustrated in FIG. 11, the processor in FIG. 11 may perform the method executed by the terminal device in any one of the foregoing method embodiments.

In an example, if the first access network device is of the structure illustrated in FIG. 11, the processor in FIG. 11 may perform the method executed by the first access network device in any one of the foregoing method embodiments.

In an example, if the second access network device is of the structure illustrated in FIG. 11, the processor in FIG. 11 may perform the method executed by the second access network device in any one of the foregoing method embodiments.

In an optional embodiment, the memory 1103 is configured to store a program instruction. T the processor 1102 is configured to invoke the program instruction stored in the memory 1103, to execute operations executed by the terminal device, the first access network device, and the second access network device in the embodiments corresponding to FIG. 4 to FIG. 8. Specifically, the functions/the execution process of the sending unit and the receiving unit in FIG. 9 may be implemented by invoking, by the processor 1102 in FIG. 11, a computer execution instruction stored in the memory 1103. Optionally, the functions/ the execution process of the sending unit and the receiving unit in FIG. 9 may be implemented by the transceiver 1101 in FIG. 11. The functions/ the execution process of the receiving unit, the determining unit, and the selecting unit in FIG. 10 may all be implemented by invoking, by the processor 1102 in FIG. 11, a computer execution instruction stored in the memory 1103. Optionally, the functions/ the execution process of the determining unit and the selecting unit in FIG. 10 may be implemented by invoking, by the processor 1102 in FIG. 11, a computer execution instruction stored in the memory 1103, and the functions/ the execution process of the receiving unit in FIG. 10 may be implemented by the transceiver 1101 in FIG. 11.

In embodiments of the present disclosure, the method provided in embodiments of the present disclosure can be realized by running a computer program (including program codes) capable of executing operations of the described method on a general-purpose computing device, such as a computer, which includes a processing element and a storage element, such as a CPU, an RAM, an ROM, etc. The computer program may be recorded on, for example, a computer-readable recording medium, loaded into the computing device through the computer-readable recording medium, and run in the computing device.

Based on the same inventive concept, the principle and advantageous effects of solving the problem by the paging apparatus 110 provided in embodiments of the present disclosure are similar to the principle and advantageous effects of solving the problem by the terminal device, the first access network device, and the second access network device in the method embodiments of the present disclosure. Reference can be made to the principle and advantageous effects in method embodiments, and for ease of description, details are not described herein again.

The paging apparatus (for example, the paging apparatus 90, the paging apparatus 100, and the paging apparatus 110) may be, for example, a chip or a chip module.

A chip is further provided in embodiments of the present disclosure. The chip is configured to execute relevant operations of the terminal device, the first access network device, and the second access network device in the method embodiments.

A situation in which the chip is configured to implement functions of the first access network device in the foregoing embodiments is as follows.

The chip is configured to send a first paging message to a second access network device, where the first paging message contains an identity of a terminal device to be paged and indication information for indicating that MT-SDT is to be performed.

In an optional embodiment, the chip may be further configured to receive first information from a core network device, where the first information contains QoS information about downlink data to be sent to the terminal device.

In an optional embodiment, the chip may be further configured to send second information to the second access network device, where the second information contains one or more of the following: a data volume of downlink data to be sent to the terminal device, QoS information about the downlink data, and an identity of an RB supporting SDT.

In an optional embodiment, the downlink data includes predicted data to be sent to the terminal device.

In an optional embodiment, the chip configured to send the first paging message to the second access network device is configured to send the first paging message to the second access network device in response to an identity of an RB supporting SDT including an identity of an RB of the downlink data.

In an optional embodiment, the chip may further be configured to receive capability information from the second access network device, where the capability information indicates whether a cell served by the second access network device supports MT-SDT.

Specifically, in this case, for operations executed by the chip, reference may be made to the description about the first access network device in the embodiments corresponding to FIG. 4 to FIG. 8.

A situation in which the chip is configured to implement functions of the terminal device in the foregoing embodiments is as follows.

The chip is configured to receive a paging message from an access network device, where the paging message contains an identity of a terminal device to be paged and indication information for indicating that MT-SDT is to be performed. The chip is further configured to determine whether to perform uplink transmission by using SDT resources in response to presence of uplink data to be sent; and/or select SDT resources to perform uplink transmission in response to absence of uplink data to be sent.

In an optional embodiment, the chip configured to determine whether to perform uplink transmission by using SDT resources is configured to determine to perform uplink transmission by using SDT resources in response to an identity of an RB supporting SDT including an identity of an RB of the uplink data to be sent.

Specifically, in this case, for operations executed by the chip, reference may be made to the description about the terminal device in the embodiments corresponding to FIG. 4 to FIG. 8.

A situation in which the chip is configured to implement functions of the second access network device in the foregoing embodiments corresponding to FIG. 4 to FIG. 7 is as follows.

The chip is configured to receive a first paging message from a first access network device, where the first paging message contains an identity of a terminal device to be paged and indication information for indicating that MT-SDT is to be performed.

In an optional embodiment, the chip may further be configured to send a second paging message to the terminal device according to the first paging message, where the second paging message contains the identity of the terminal device to be paged and the indication information for indicating that MT-SDT is to be performed.

In an optional embodiment, the chip may be further configured to receive second information from the first access network device, where the second information contains one or more of the following: a data volume of downlink data to be sent to the terminal device, QoS information about the downlink data, and an identity of an RB supporting SDT; and send a third paging message to the terminal device according to the second information, where the third paging message contains the identity of the terminal device to be paged and the indication information for indicating that MT-SDT is to be performed.

In an optional embodiment, the downlink data includes predicted data to be sent to the terminal device.

In an optional embodiment, the chip configured to send the third paging message to the terminal device according to the second information is configured to send the third paging message to the terminal device in response to an identity of an RB supporting SDT includes an identity of an RB of the downlink data.

In an optional embodiment, the chip may further be configured to send capability information to the first access network device, where the capability information indicates whether a cell served by the second access network device supports MT-SDT.

Specifically, in this case, for operations executed by the chip, reference may be made to the description about the second access network device in the embodiments corresponding to FIG. 4 to FIG. 7.

A situation in which the chip is configured to implement functions of the second access network device in the embodiment corresponding to FIG. 8 is as follows.

The chip is configured to receive second information from a first access network device, where the second information contains one or more of the following: a data volume of downlink data to be sent to a terminal device, QoS information about the downlink data, and an identity of an RB supporting SDT; and send a fourth paging message to the terminal device according to the second information, where the fourth paging message contains an identity of the terminal device to be paged and indication information for indicating that MT-SDT is to be performed.

In an optional embodiment, the chip may be further configured to receive a first paging message from the first access network device, where the first paging message contains the identity of the terminal device to be paged and indication information for indicating that MT-SDT is to be performed.

In an optional embodiment, the downlink data includes predicted data to be sent to the terminal device.

In an optional embodiment, the chip configured to send the fourth paging message to the terminal device according to the second information is configured to send the fourth paging message to the terminal device in response to an identity of an RB supporting SDT including an identity of an RB of the downlink data.

In an optional embodiment, the chip may further be configured to send capability information to the first access network device, where the capability information indicates whether a cell served by the second access network device supports MT-SDT.

Specifically, in this case, for the operation executed by the chip, reference may be made to the description about the second access network device in the embodiment corresponding to FIG. 8.

In a possible embodiment, the chip includes at least one processor, at least one first memory, and at least one second memory. The at least one first memory and the at least one processor are interconnected via lines. The at least one first memory is configured to store instructions. The at least one second memory and the at least one processor are interconnected via lines. The at least second memory is configured to stores data required in the method embodiments.

For each apparatus or product applied to or integrated in a chip, each module contained therein may be implemented by hardware such as circuits, or at least some of the modules may be implemented by a software program that runs on a processor integrated in the chip, and the remaining (if any) modules may be implemented by hardware such as circuits.

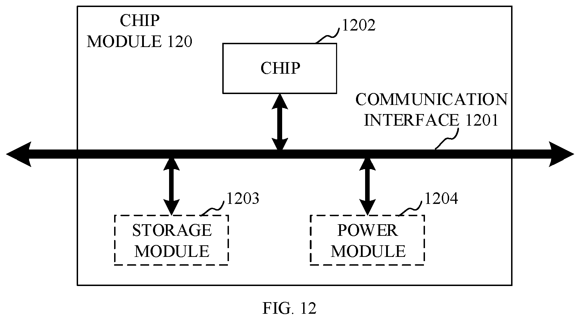

Reference is made to FIG. 12, which is a schematic structural diagram of a chip module provided in embodiments of the present disclosure. The chip module 120 may execute relevant operations of the terminal device, the first access network device, and the second access network device in the method embodiments. The chip module 120 includes a communication interface 1201 and a chip 1202.

The communication interface is configured to perform communication within the chip module, or perform communication between the chip module and an external device. The chip is configured to implement functions of the terminal device, the first access network device, and the second access network device in the embodiments of the present disclosure. For details, reference may be made to the embodiments corresponding to FIG. 4 to FIG. 8. Optionally, the chip module 120 can further include a storage module 1203 and a power module 1204. The storage module 1203 is configured to store data and instructions. The power module 1204 is configured to power the chip module.

For each apparatus and product applied to or integrated in the chip module, each module contained therein may be implemented by hardware such as circuits, different modules may be located in a same component (such as a chip, circuit module, etc.) or different components of the chip module, or at least some modules may be implemented by a software program that runs on a processor integrated in the chip module, and the remaining (if any) modules may be implemented by hardware such as circuits.

A computer-readable storage medium is further provided in embodiments of the present disclosure. The computer-readable storage medium stores one or more instructions, and the one or more instructions are configured to be loaded by a processor to perform the method provided by the method embodiments.

A computer program product is further provided in embodiments of the present disclosure. The computer program product includes a computer program or an instruction. The computer program or the instruction, when executed on a computer, enables the computer to perform the method provided by the method embodiments.

A paging system is further provided in embodiments of the present disclosure. The system may include the first access network device and the second access network device in the embodiments corresponding to FIG. 4 to FIG. 8. Optionally, the system may further include the terminal device in the embodiments corresponding to FIG. 4 to FIG. 8. Optionally, the system may further include the core network device in the embodiments corresponding to FIG. 4 to FIG. 8.

Each module/unit in the apparatuses or products described in the foregoing embodiments may be a software module/unit, a hardware module/unit, or may be partially a software module/unit and partially a hardware module/unit. For example, per apparatus and product applicable to or integrated into a chip, each module/unit included may be implemented by means of hardware such as circuits or the like, or at least part of modules/units may be implemented by means of a software program that run on a processor integrated inside the chip, and the rest of (if any) modules/units may be implemented by means of hardware such as circuits or the like. For each apparatus and product applicable to or integrated into a chip module, each module/unit included may be implemented by means of hardware such as circuits or the like, and different modules/units may be located in a same component (such as a chip, a circuit module, etc.) or different components of the chip module. Alternatively, at least part of modules/units may be implemented by means of the software program that is run on the processor integrated inside the chip module, and the rest of (if any) modules/units may be implemented by means of hardware such as circuits or the like. For each apparatus and product applicable to or integrated into a terminal device, each module/unit included may be implemented by means of hardware such as circuits or the like, and different modules/units may be located in a same component (e.g., a chip, a circuit module, etc.) or different components in the terminal device, or at least part of modules/units may be implemented by means of the software program that run on the processor integrated inside the terminal device, and the rest of (if any) modules/units may be implemented by means of hardware such as circuits or the like.

It may be noted that, for the sake of simplicity, the various method embodiments above are described as a series of action combinations. However, it will be appreciated by those skilled in the art that the disclosure is not limited by the sequence of actions described. According to the disclosure, some operations may be performed in other orders or simultaneously. In addition, it will be appreciated by those skilled in the art that embodiments described in the specification are preferable embodiments, and the actions and modules involved are not necessarily essential to the disclosure.

Steps in methods according to embodiments of the present disclosure may be adjusted sequentially, combined, and deleted according to actual requirements.

Modules in a processing device according to embodiments of the present disclosure may be combined, divided, and deleted according to actual requirements.

It will be understood by those of ordinary skill in the art that all or a part of the various methods of embodiments described above may be accomplished by means of a program to instruct associated hardware, and the program may be stored in a computer-readable memory, which may include a flash disk, an ROM, an RAM, a magnetic disk, or an optical disk.

The foregoing disclosures are merely preferred embodiments of the present disclosure and are merely a part of embodiments of the present disclosure, and are unable to limit the scope of protection of the present disclosure.

## Claims

1. A paging method, applied to a first access network device and comprising:
sending a first paging message to a second access network device, wherein the first paging message contains an identity of a terminal device to be paged and indication information for indicating that mobile terminated-small data transmission (MT-SDT) is to be performed.

2. The method of claim 1, further comprising:
receiving first information from a core network device, wherein the first information contains quality of service (QoS) information about downlink data to be sent to the terminal device.

3. The method of claim 1 or 2, further comprising:
sending second information to the second access network device, wherein the second information contains one or more of the following: a data volume of downlink data to be sent to the terminal device, QoS information about the downlink data, and an identity of a radio bearer (RB) supporting small data transmission (SDT).

4. The method of claim 2 or 3, wherein the downlink data comprises predicted data to be sent to the terminal device.

5. The method of any one of claims 2 to 4, wherein sending the first paging message to the second access network device comprises:
sending the first paging message to the second access network device in response to an identity of an RB supporting SDT comprising an identity of an RB of the downlink data.

6. The method of any one of claims 1 to 5, further comprising:
receiving capability information from the second access network device, wherein the capability information indicates whether a cell served by the second access network device supports MT-SDT.

7. A paging method, applied to a terminal device and comprising:
receiving a paging message from an access network device, wherein the paging message contains an identity of the terminal device to be paged and indication information for indicating that mobile terminated-small data transmission (MT-SDT) is to be performed; and
determining whether to perform uplink transmission by using small data transmission (SDT) resources in response to presence of uplink data to be sent; and/or selecting the SDT resources to perform uplink transmission in response to absence of uplink data to be sent.

8. The method of claim 7, wherein determining whether to perform uplink transmission by using the SDT resources comprises:
determining to perform uplink transmission by using the SDT resources in response to an identity of an RB supporting SDT comprising an identity of an RB of the uplink data to be sent.

9. A paging method, applied to a second access network device and comprising:
receiving a first paging message from a first access network device, wherein the first paging message contains an identity of a terminal device to be paged and indication information for indicating that mobile terminated-small data transmission (MT-SDT) is to be performed.

10. The method of claim 9, further comprising:
sending a second paging message to the terminal device according to the first paging message, wherein the second paging message contains the identity of the terminal device to be paged and the indication information for indicating that MT-SDT is to be performed.

11. The method of claim 9, further comprising:
receiving second information from the first access network device, wherein the second information contains one or more of the following: a data volume of downlink data to be sent to the terminal device, quality of service (QoS) information about the downlink data, and an identity of a radio bearer (RB) supporting SDT; and
sending a third paging message to the terminal device according to the second information, wherein the third paging message contains the identity of the terminal device to be paged and the indication information for indicating that MT-SDT is to be performed.

12. The method of claim 11, wherein the downlink data comprises predicted data to be sent to the terminal device.

13. The method of claim 11 or 12, wherein sending the third paging message to the terminal device according to the second information comprises:
sending the third paging message to the terminal device in response to the identity of the RB supporting SDT comprises an identity of an RB of the downlink data.

14. The method of any one of claims 9 to 13, further comprising:
sending capability information to the first access network device, wherein the capability information indicates whether a cell served by the second access network device supports MT-SDT.

15. A paging method, applied to a second access network device and comprising:
receiving second information from a first access network device, wherein the second information contains one or more of the following: a data volume of downlink data to be sent to a terminal device, quality of service (QoS) information about the downlink data, and an identity of a radio bearer (RB) supporting small data transmission (SDT); and
sending a fourth paging message to the terminal device according to the second information, wherein the fourth paging message contains an identity of the terminal device to be paged and indication information for indicating that mobile terminated-small data transmission (MT-SDT) is to be performed.

16. The method of claim 15, further comprising:
receiving a first paging message from the first access network device, wherein the first paging message contains the identity of the terminal device to be paged and indication information for indicating that MT-SDT is to be performed.

17. The method of claim 15 or 16, wherein the downlink data comprises predicted data to be sent to the terminal device.

18. The method of any one of claims 15 to 17, wherein sending the fourth paging message to the terminal device according to the second information comprises:
sending the fourth paging message to the terminal device in response to the identity of the RB supporting SDT comprising an identity of an RB of the downlink data.

19. The method of claim 16, further comprising:
sending capability information to the first access network device, wherein the capability information indicates whether a cell served by the second access network device supports MT-SDT.

20. A paging apparatus, comprising:
a sending unit configured to send a first paging message to a second access network device, wherein the first paging message contains an identity of a terminal device to be paged and indication information for indicating that mobile terminated-small data transmission (MT-SDT) is to be performed.

21. A paging apparatus, comprising a receiving unit, a determining unit, and a selecting unit, wherein
the receiving unit is configured to receive a paging message from an access network device, wherein the paging message contains an identity of the terminal device to be paged and indication information for indicating that mobile terminated-small data transmission (MT-SDT) is to be performed;
the determining unit is configured to determine whether to perform uplink transmission by using small data transmission (SDT) resources in response to presence of uplink data to be sent; and/or the selecting unit is configured to select the SDT resources to perform uplink transmission in response to absence of uplink data to be sent;

22. A paging apparatus, comprising:
a receiving unit configured to receive a first paging message from a first access network device, wherein the first paging message contains an identity of a terminal device to be paged and indication information for indicating that mobile terminated-small data transmission (MT-SDT) is to be performed.

23. A paging apparatus, comprising:
a receiving unit configured to receive second information from a first access network device, wherein the second information contains one or more of the following: a data volume of downlink data to be sent to a terminal device, quality of service (QoS) information about the downlink data, and an identity of a radio bearer (RB) supporting small data transmission (SDT); and
a sending unit configured to send a fourth paging message to the terminal device according to the second information, wherein the fourth paging message contains an identity of the terminal device to be paged and indication information for indicating that mobile terminated-small data transmission (MT-SDT) is to be performed;

24. A paging apparatus, comprising a processor configured to perform the method of any one of claims 1 to 19.

25. A chip configured to:
send a first paging message to a second access network device, wherein the first paging message contains an identity of a terminal device to be paged and indication information for indicating that mobile terminated-small data transmission (MT-SDT) is to be performed.

26. A chip configured to:
receive a paging message from an access network device, wherein the paging message contains an identity of the terminal device to be paged and indication information for indicating that mobile terminated-small data transmission (MT-SDT) is to be performed; and
determine whether to perform uplink transmission by using small data transmission (SDT) resources in response to presence of uplink data to be sent; and/or select the SDT resources to perform uplink transmission in response to absence of uplink data to be sent.

27. A chip configured to:
receive a first paging message from a first access network device, wherein the first paging message contains an identity of a terminal device to be paged and indication information for indicating that mobile terminated-small data transmission (MT-SDT) is to be performed

28. A chip configured to:
receive second information from a first access network device, wherein the second information contains one or more of the following: a data volume of downlink data to be sent to a terminal device, quality of service (QoS) information about the downlink data, and an identity of a radio bearer (RB) supporting small data transmission (SDT); and
send a fourth paging message to the terminal device according to the second information, wherein the fourth paging message contains an identity of the terminal device to be paged and indication information for indicating that mobile terminated-small data transmission (MT-SDT) is to be performed.

29. A chip module, comprising:
a communication interface configured to perform communication within the chip module, or perform communication between the chip module and an external device; and
a chip configured to send a first paging message to a second access network device, wherein the first paging message contains an identity of a terminal device to be paged and indication information for indicating that mobile terminated-small data transmission (MT-SDT) is to be performed.

30. A chip module, comprising:
a communication interface configured to perform communication within the chip module, or perform communication between the chip module and an external device; and
a chip configured to:
receive a paging message from an access network device, wherein the paging message contains an identity of the terminal device to be paged and indication information for indicating that mobile terminated-small data transmission (MT-SDT) is to be performed; and
determine whether to perform uplink transmission by using small data transmission (SDT) resources in response to presence of uplink data to be sent; and/or select the SDT resources to perform uplink transmission in response to absence of uplink data to be sent.

31. A chip module, comprising:
a communication interface configured to perform communication within the chip module, or perform communication between the chip module and an external device; and
a chip configured to receive a first paging message from a first access network device, wherein the first paging message contains an identity of a terminal device to be paged and indication information for indicating that mobile terminated-small data transmission (MT-SDT) is to be performed.

32. A chip module, comprising:
a communication interface configured to perform communication within the chip module, or perform communication between the chip module and an external device; and
a chip configured to: receive second information from a first access network device, wherein the second information contains one or more of the following: a data volume of downlink data to be sent to a terminal device, quality of service (QoS) information about the downlink data, and an identity of a radio bearer (RB) supporting small data transmission (SDT); and send a fourth paging message to the terminal device according to the second information, wherein the fourth paging message contains an identity of the terminal device to be paged and indication information for indicating that mobile terminated-small data transmission (MT-SDT) is to be performed.
